# EUROPEAN PATENT APPLICATION

(11) **EP 4 660 961 A1**
(43) Date of publication of application: **10.12.2025**
(21) Application number: 24179786.9
(22) Date of filing: 04.06.2024
(51) Int. Cl.: G06V 10/25, G06V 10/98, G06V 20/40, G06V 20/56

(54) **METHOD AND SYSTEM FOR VALIDATING OBJECT DETECTION MODEL OUTPUTS**

(71) Applicant: Siemens Aktiengesellschaft, 80333 München (DE)
(72) Inventor: JANARDHANAN, Shaiju, 670303 Kannur, Kerala (IN); KUMAR, Ashish, 835222 Ranchi, Jharkhand (IN)
(74) Representative: Isarpatent

(57) **Abstract**

A computer-implemented method (100) and system (200) for automatic fault detection in object detection systems is disclosed. The method (100) involves receiving a video frame input from an input device and preprocessing this input using multiple bounding boxes associated with the detection of various objects. The method (100) further includes validating the detection of these objects by applying a set of assertions related to the bounding boxes. Based on this validation, the method (100) determines whether to flag the received video frame input, thereby identifying potential faults in the object detection system.

## Description

The present invention relates generally to the field of object detection systems, and more specifically to methods and systems for validating object detection model outputs.

Object detection systems are fundamental components in various visual perception-based Al applications, playing a crucial role in fields such as traffic management, industrial safety, autonomous driving, and printed circuit board (PCB) defect detection. In traffic management, object detection systems enhance traffic flow and safety by accurately monitoring and managing vehicle and pedestrian activities. In industrial environments, these systems ensure workplace safety by verifying compliance with safety protocols, such as wearing protective gear near heavy equipment. Autonomous driving systems rely on object detection to identify and respond to obstacles, ensuring safe navigation. Similarly, in the electronics industry, PCB defect detection systems utilize object detection to identify defects, thereby maintaining the quality and reliability of electronic products.

However, the object detection systems are not infallible and can exhibit several issues when deployed in real-world scenarios. Common issues include misclassification, poor localization, both misclassification and poor localization, disparity (bounding box size discrepancies among multiple objects in an image), duplicity (detecting the same object multiple times with different class names), and misdetection. These issues can lead to severe consequences, particularly in safety-critical applications, and are challenging to detect or monitor without real-time ground truth data.

Currently, human observers are used to validate the outputs of object detection systems, ensuring that detections are accurate. While this method may be feasible in lab settings, it becomes impractical in real-world deployments where cameras capture frames at 25 frames per second and object detection systems process them in real time. Therefore, addressing these challenges is essential for enhancing the reliability and safety of object detection systems across various applications.

The present invention aims to improve the performance and robustness of object detection systems by mitigating the aforementioned issues, thereby ensuring more accurate and dependable operation in real-world environments. The objective of the present invention is achieved by a method for automatic fault detection in object detection systems as disclosed herein.

The method comprises of receiving a video frame input from an input device and preprocessing the video frame input using a plurality of bounding boxes associated with detection of a plurality of objects. The method further comprises of validating the detection of the plurality of objects based on a set of assertions associated with the plurality of the bounding boxes and generating a flagged video frame input based on the validation of the received video frame input. Advantageously, the use of assertions for validation provides a flexible framework that can be adapted or extended to incorporate new rules or criteria as needed. Additionally, the flagging mechanism serves as a quality control step, ensuring that only validated detections are used for further processing.

The method further comprises of a bounding box overlap assertion, the assertion comprising of determining a percentage of the overlapping of a first bounding box of the plurality of the bounding boxes and the second bounding box of the plurality of the bounding boxes and flagging the received video frame using the determination of the percentage of overlapping being more than a predefined threshold. By determining the percentage of overlap between bounding boxes, the system can better differentiate between distinct objects. The determination of the first bounding box overlap assertion further comprises of calculating the Intersection over Union (IoU) of overlapping bounding boxes; and flagging an overlap greater a threshold percentage. Therefore, incorporating a bounding box overlap assertion enhances the precision and reliability of object detection systems.

The method further comprises of a bounding box disparity assertion, the assertion comprising determining a distance between a first bounding box of the plurality of the bounding boxes and a second bounding box of the plurality of the bounding boxes. The assertion further comprises determining a violation of logical size relationship between the first bounding box and the second bounding box. The distance between the first bounding box and the second bounding box being less than a threshold neighboring distance, and a smaller object has a larger bounding box than a larger object within the same frame. Furthermore, the method comprises of flagging the received video frame data based on the determination of the violation. By detecting disparities in bounding box sizes and logical relationships between objects within the same frame, the method can identify potential errors or anomalies in the detection process. Flagging frames based on these violations helps ensure more accurate object detection results by highlighting instances where objects may be misidentified or incorrectly sized. This contributes to overall improvement in the precision and reliability of the object detection system.

Throughout the present invention, the term "industrial environment" may refer to plurality of industrial assets connected with each other to achieve a function. The industrial environment may be comprised of industrial assets such as industrial machines, industrial devices, industrial controllers, and so forth.

Throughout the present invention, the term "object detection system" is hereby defined as a computational framework designed for the identification and localization of specific objects within digital images or video frames. This system employs machine learning algorithms, including but not limited to deep learning techniques, for the analysis of visual data to detect objects by classifying said objects and delineating their locations with bounding boxes. Object detection systems are utilized in a variety of applications, including but not limited to autonomous vehicles, security surveillance, and image recognition, to automatically interpret and process visual information.

Throughout the present inventio, the term "bounding boxes" are hereby defined as rectangular coordinate structures utilized in digital image processing and computer vision for the purpose of delineating the position and spatial extent of an object within a digital image or video frame. Each bounding box is characterized by a set of coordinates, which may include the top-left and bottom-right corners, or alternatively, the center point along with the width and height of the rectangle. Bounding boxes serve to demarcate and isolate specific objects from the surrounding visual data, thereby enabling object detection, classification, and tracking within the framework of an object detection system.

The object of the invention is also achieved by a computer program product comprising machine readable instructions, that when executed by one or more processing units, cause the one or more processing units to perform the aforementioned method steps. The computer program product further comprises a memory unit communicatively coupled to the one or more processing units. The memory unit comprises a module stored in the form of machine-readable instructions executable by the one or more processing units. The module is configured to perform method steps as described above. The execution of the module may also be performed using co-processors such as Graphical Processing Unit (GPU), Field Programmable Gate Array (FPGA) or Neural Processing/Compute Engines.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
FIG 1 is a flowchart of a method for automatic fault detection in object detection systems, in accordance with one or more embodiments of the present invention;
FIG 2 is a block diagram representation of a system for automatic fault detection in object detection systems, in accordance with one or more embodiments of the present invention;
FIG 3 is a depiction of common issues in object detection system as known in the field;
FIG 4 is a depiction of an example of typical object detection system, in accordance with one or more embodiments of the present invention;
FIG 5 is a depiction of a bounding box overlap in traffic scenario, in accordance with one or more embodiments of the present invention;
FIG 6 is a flowchart of a bounding box overlap assertion in traffic scenario, in accordance with one or more embodiments of the present invention;
FIG 7 is a depiction of a disparity in bounding box dimension assertion, in accordance with one or more embodiments of the present invention;
FIG 8 is a flowchart of disparity in bounding box dimension assertion, in accordance with one or more embodiments of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

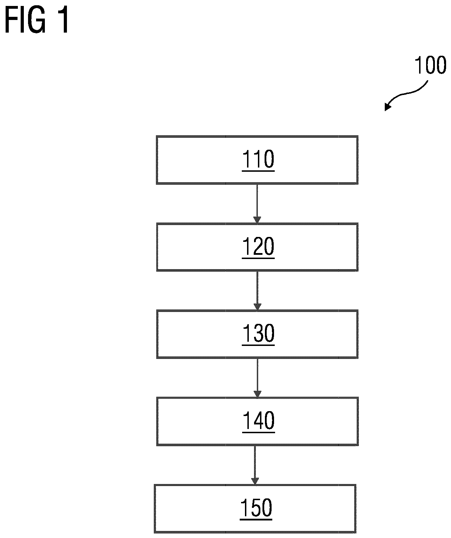

Referring to FIG 1, illustrated is a flowchart of a method (as represented by reference numeral 100) for automatic fault detection in object detection system, in accordance with an embodiment of the present invention. Throughout the present invention, the term "object detection system" is hereby defined as a computational framework designed for the identification and localization of specific objects within digital images or video frames. The present invention aims to automatically detect issues commonly observed in object detection systems, such as misclassification, poor localization, bounding box size discrepancies, multiple detections, background detection, and misdetection, by creating assertions that validate the accuracy of the object detection results. These assertions involve executing an algorithm to identify any logical inconsistencies in the object detection output.

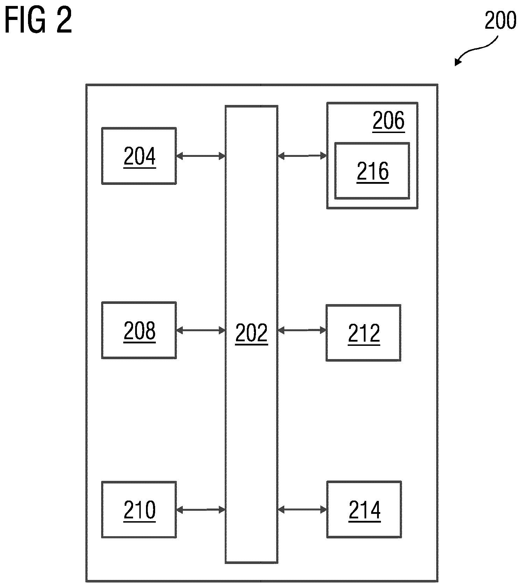

Referring to FIG 2, illustrated is a block diagram of a system 200 for automatic fault detection in object detection system, in accordance with an embodiment of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include a user device 208, such as a communication device (with the said terms being interchangeably used) which may enable the test suite management system 200 to communicate with other systems for receiving and transmitting information. The communication device 208 may include a medium (e.g., a communication channel) through which the system 200 communicates with other system. Examples of the communication device 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication device 208 may include one or more of a wired connection, a wireless network, cellular networks such as 2G, 3G, 4G, 5G mobile networks, and a Zigbee connection.

The system 200 also includes a memory unit 210. As used herein, the memory unit 210 is an organized collection of structured data, typically stored in a computer system and designed to be easily accessed, managed, and updated. The memory unit 210 may be in form of a central repository of information that can be queried, analysed, and processed to support various applications and business processes. In the system 200, the memory unit 210 provides mechanisms for storing, retrieving, updating, and deleting data, and typically includes features such as data validation, security, backup and recovery, and data modelling. The memory unit 210 stores multiple video frames that are generated by the said process. The memory unit 210 keeps growing over a period of time as new video frame inputs and user authentication are stored in the memory unit 210.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. It is to be understood that, when reference is made in the present invention to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for visualizing the shared assets in an industrial environment. Also, in the system 200, the memory 206 may be configured to store the data associated with or generated by the execution of the inventive steps. In particular, the memory 206 may include a module 216 to execute the inventive steps.

Referring to FIG. 1 and FIG. 2 in combination, the various steps of the method 100 as described hereinafter may be executed in the system 200, or specifically in the processor 204 of the system 200, for automatic fault detection in object detection systems. For purposes of the present invention, detecting fault in the object detection systems, the present method 100 is embodied as an algorithm for identify and address faults in object detection operations based on the assertions. It may be appreciated that although the method 100 is illustrated and described as a sequence of steps, it may be contemplated that various embodiments of the method 100 may be performed in any order or a combination and need not include all of the illustrated steps.

In embodiments of the present invention, at step 101, the method 100 includes receiving a video frame input in a form of individual images or frames that are extracted from a video stream or a recorded video file, which are then processed by an object detection system. Each frame is essentially a snapshot of the scene at a particular point in time, and the object detection system analyses these frames to identify and locate objects within them. The user input may include one or more inputs. The user input may be a comment relating to the video frame already existing in the memory unit 204. This can be a continuous feed from a camera, such as a surveillance camera, traffic camera, or any other live video source or a pre-recorded footage from various sources such as security cameras, dash cams, or other recording devices.

In embodiments of the present invention, at step 102, the method 100 includes preprocessing the video frame input using a plurality of bounding boxes associated with detection of a plurality of objects. Each extracted frame is treated as a single image and is fed into the object detection system. The system 200 then performs various operations such as preprocessing, object detection, and tracking on these frames. The system 200 identifies objects within each frame, classifying them into predefined categories (e.g., car, pedestrian, bicycle). The detected objects are enclosed in bounding boxes, and relevant data such as the object's class, coordinates of the bounding box, and confidence score are recorded.

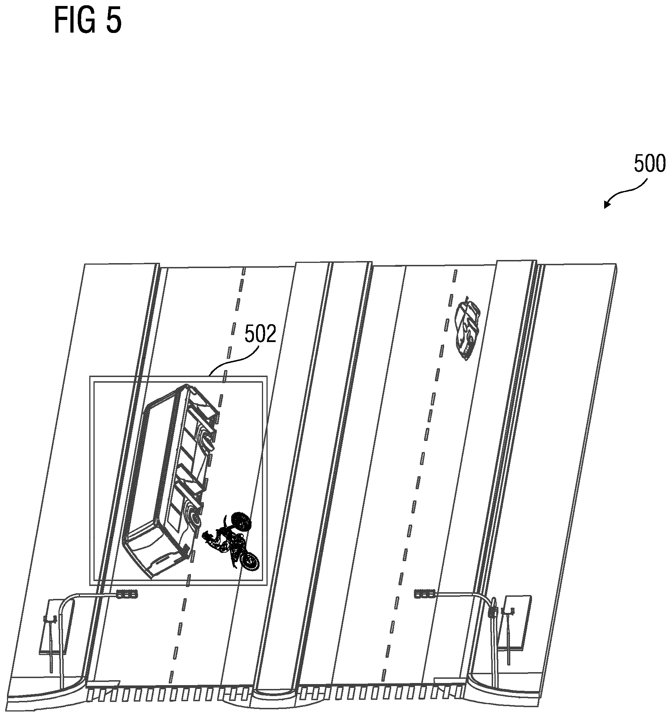

In embodiments of the present invention, at step 103, the method 100 includes validating the detection of the plurality of objects based on a set of assertions associated with the plurality of the bounding boxes. The set of assertions necessitate the implementation of an algorithm to ascertain the absence of any logical inconsistencies within the output of object detection. For example, the set of assertions used for identification of issues with object detection are bounding box overlap assertion and disparity in bounding box dimension assertion explained in the figures 5-8.

In embodiments of the present invention, at step 104, the method 100 involves flagging the received video frame data based on the determination of a violation. In instances where it is determined that the data from the received video frame is inaccurate or has been compromised, the data is marked or highlighted to draw attention to the occurrences of such a violation or breach. This marking process may involve the application of a visual marker, such as a colored tag or icon, or the addition of metadata to the data, indicating the presence of a violation. Additionally, a method of identification may be established for the video frames that do not violate the set of assertions as described in step 103. This ensures that both compliant and non-compliant data are clearly distinguishable.

Following the flagging of the received video frame input based on the validation, the process advances to step 105, which involves the recapturing of the video frame if necessary due to the failure to meet the specified assertions.

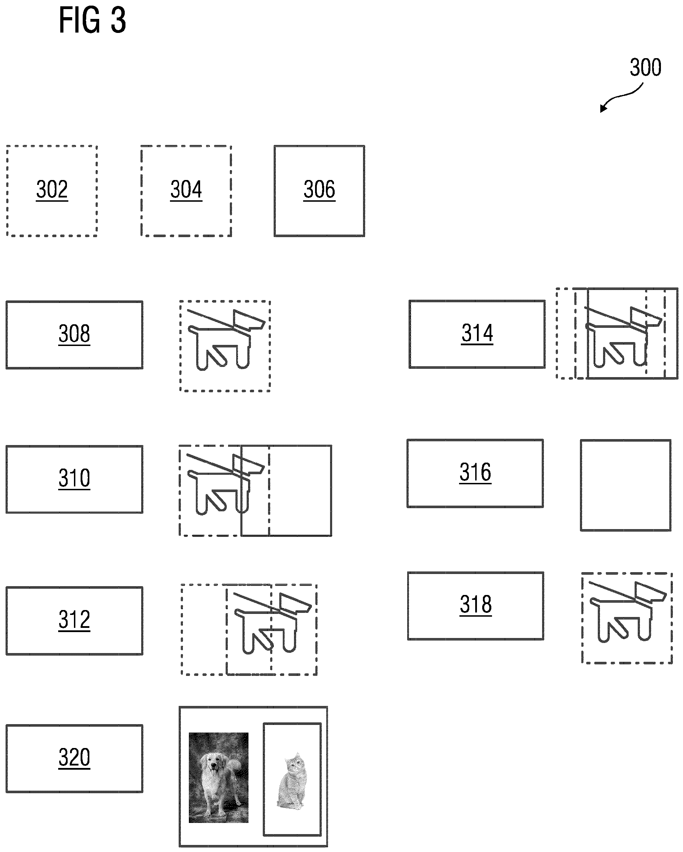

FIG 3 is an exemplary depiction of common issues in object detection system as known in the field. The operation of the object detection systems typically, involves but not limited to, three critical steps, localization, classification, and bounding box creation. Localization involves the process of determining the spatial position of an object of interest within an image or frame. Classification pertains to identifying and assigning the type or class of the object, such as distinguishing between a truck and a person. Bounding box creation is the procedure of delineating a bounding box around the identified object to clearly define its boundaries within the image. The accuracy of these steps is crucial for the effective functioning of applications that rely on the outputs of object detection systems. For instance, accurately detecting an object in front of an autonomous vehicle is vital for the vehicle to stop or navigate around obstacles. Similarly, detecting whether a worker is wearing a helmet near heavy machinery is essential for preventing serious injuries. However, object detection systems can sometimes operate incorrectly. The common issues relating to the object detection system includes misclassification, duplicity, poor localization, background detection, misclassification and poor localization, miss detection, and disparity. These issues, illustrated in Figure 3, can have serious consequences, particularly in safety-critical applications. Moreover, detecting and monitoring these problems in real-time is challenging without ground truth data.

As illustrated in FIG 3, the detection can be classified into three different categories, namely, False positive detection 302, Ground truth 304 and true positive detection 306. Each of the video frame image can be classified into one of these categories. For example, in a case there is a misclassification 308 the picture depicted in the bounding box is categorized as misclassified. Misclassification occurs when the object detection system identifies an object but assigns it the wrong class label. For instance, a dog might be detected as a cat. This issue can arise due to similarities in appearance between different classes, poor quality of training data, or insufficient training of the model.

Similarly, in another scenario, the fig 3 illustrates a bounding box that is poorly located on the object but determines the object correctly. Poor Localization 310 refers to the inaccuracy in positioning the bounding box around the detected object. The system 200 might recognize the object correctly but fail to draw the bounding box precisely, either missing parts of the object or including irrelevant background. Poor localization can occur due to a lack of resolution in the detection algorithm, improper training, or challenges posed by overlapping objects. Another scenario may be of both Misclassification and Poor Localization 312. This issue occurs when the object detection system makes both types of errors simultaneously. The object is not only classified incorrectly but also poorly localized. For example, the system 200 might label a bicycle as a motorcycle and place an inaccurate bounding box that either cuts off parts of the bicycle or includes unnecessary background. Another example may be of Duplicacy or Multiple Detections 314 that occurs when the same object is detected multiple times, often with different class labels. For instance, a single pedestrian might be detected twice, once as a pedestrian and once as a bicyclist. This redundancy can confuse subsequent processing steps and degrade the overall system performance. It often results from overlapping bounding boxes and insufficient suppression of redundant detections.

In another example, there may be Background Detection 316, which happens when the object detection system falsely identifies parts of the background as objects. For example, a shadow or a tree might be detected as a person or vehicle. This issue usually arises due to the model being over-sensitive to certain features present in the background that resemble objects from the training dataset. Misdetection 318 is a broader term that encompasses failures in detecting an object altogether, detecting non-existent objects, or other incorrect detections. This includes false positives (detecting objects that are not there) and false negatives (failing to detect objects that are present). Misdetection can result from inadequate training data, complex or cluttered environments, or limitations in the detection algorithm itself. Another potential issue may be disparity 320, which refers to inconsistencies in the sizes of bounding boxes for identical objects in an image. For instance, two identical cars in the same scene might have bounding boxes of significantly different sizes. This can be problematic in applications where uniformity and accuracy of object dimensions are critical. Disparity often arises from variations in object scales, angles, or occlusions within the image.

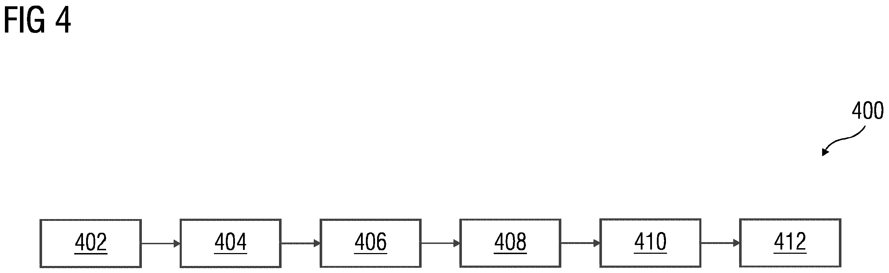

FIG 4 illustrates a typical object detection system 400, comprises the following main components: input device 402, video processor 404, object detector 406, object tracker 408, domain logic 410 and output device 412. Input device 402 can be a live video stream from a camera or a recorded video from a recording device. The video processor 404 handles preprocessing, scaling operations, and buffering of the input image stream. The object detector 406 performs object detection on each input image and sends the details of the detected objects to the next component. The object tracker 408 component processes the object detector outputs and derives tracking information for all objects of interest across multiple detection results. The domain logic or core application logic 410 processes the detection and tracking results to perform tasks such as counting vehicles, finding anomalies, and detecting safety violations. The output of the domain logic is then sent to the output device 412. FIG 4 demonstrates that object detection is the core component that drives the rest of the application. Any discrepancies in its operation can render the application ineffective, resulting in financial losses and business inefficiencies.

FIG 5 depicts a bounding box overlap in traffic scenario 500, in accordance with one of the embodiments of the present invention. Our invention addresses the challenge of detecting common issues in object detection systems, particularly focusing on "multiple detections" of the same object with different class labels, even when classes are mutually exclusive.

This issue arises when an object is detected as belonging to more than one class or type. For instance, in a traffic scenario, as illustrated in Figure 3, a single object, such as a bus, may be erroneously detected as both a bus and a motorbike. This discrepancy can be identified using a bounding box overlap assertion. The assertion checks the overlap in the bounding box areas 502 of the two detected objects. If the overlap exceeds a certain threshold, for the purpose of example in this case it is 90%, it indicates a failure of the assertion. The overlap is calculated using the Intersection over Union (IoU) formula: IoU = Area of (Bounding box of object 1 ∩ Bounding box of object 2) / Area of (Bounding box of object 1 ∪ Bounding box of object 2)

By applying this assertion, our invention ensures that logical inconsistencies in object detection results are automatically identified and addressed, thereby improving the reliability of the object detection system and preventing errors such as those illustrated in Figure 5.

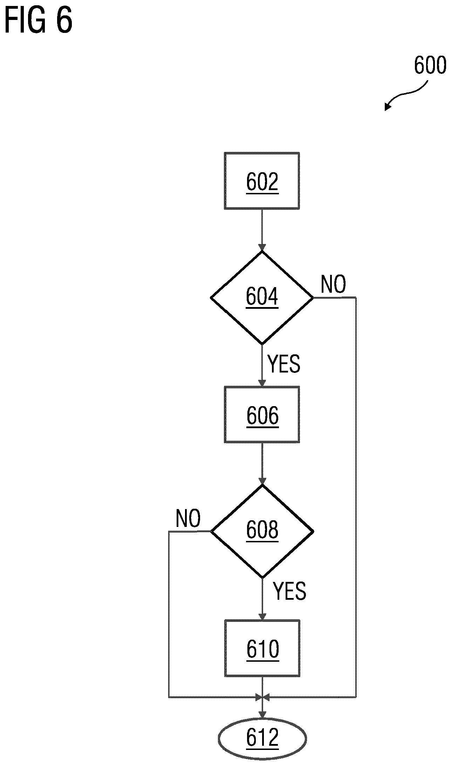

Illustrated in FIG 6 is a flowchart of depiction of a bounding box overlap in traffic scenario 600, in accordance with FIG 5. The present invention focuses a solution for enhancing the reliability of object detection systems by automatically detecting logical inconsistencies, particularly those involving bounding box overlaps. The process, detailed as follows, ensures thorough examination and validation of object detection results: Our invention focuses on enhancing the reliability of object detection systems by automatically detecting logical inconsistencies, particularly those involving bounding box overlaps. The process, detailed as follows, ensures thorough examination and validation of object detection results. The process initiates by capturing object detections for all objects present in a given frame that involves identifying and delineating each object with a bounding box. The next step is Bounding Box Intersection Check, where the system 200 evaluates whether any of the bounding boxes intersect. Bounding box intersection occurs when two or more detected objects have overlapping bounding areas within the frame. If no intersections are detected, the process concludes, indicating that no overlap-related discrepancies are present. If intersections are identified, the system 200 proceeds to calculate the Intersection over Union (IoU) values for each pair of overlapping bounding boxes. IoU is a measure that calculates the ratio of the overlap area to the combined area of the bounding boxes. It is computed as per equation (1).

The next step is Overlap Threshold Evaluation wherein the system 200 compares the calculated iou values against a predefined overlap threshold. For this case, the threshold value may be at 90 percentage. This threshold determines the acceptable limit for bounding box overlap. In a case, the IoU value for any pair of overlapping bounding boxes exceeds the threshold (90%), it indicates a significant overlap, suggesting a potential detection error, such as the same object being classified as different types. In another case if the iou values are below the threshold, the system 200 continues to monitor for other intersections, ensuring comprehensive validation of the frame. The next step is flagging assertion failure and capturing frame. Upon detecting an overlap that violates the threshold, the system 200 flags an assertion failure. This step involves recording the specific frame and the associated detection details for further analysis and debugging. Capturing the frame allows for a detailed examination of the detection error, facilitating improvements in the detection algorithm or training data. Finally, after flagging any assertion failures and capturing the relevant frames, the process terminates. This ensures that each frame is thoroughly validated for detection consistency before concluding the analysis. By implementing this process of bounding box overlap assertion, our invention effectively identifies and addresses significant discrepancies in object detection results. This enhances the reliability and accuracy of object detection systems, particularly in scenarios where precise identification and classification of multiple objects are crucial.

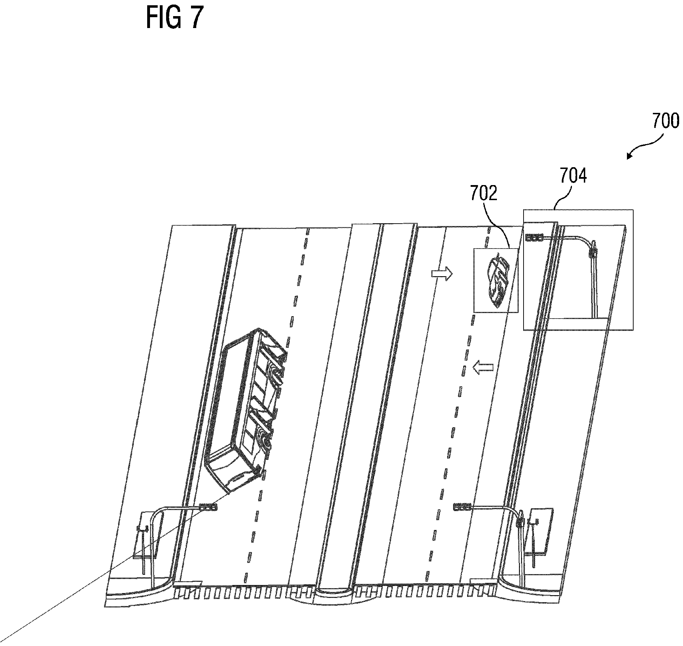

FIG 7 is a depiction of a disparity in bounding box dimension assertion 700, in accordance with one or more embodiments of the present invention. In another embodiment, an assertion mechanism is presented to detect disparities in bounding box dimensions, which ensures that the relative sizes of bounding boxes correspond accurately to the actual sizes of the objects they represent. This assertion is based on the principle that the dimensions of a bounding box should be proportional to the object's size. For example, the bounding box of a bus should always be larger than that of a bike if both objects are sufficiently close in an image, particularly in a front elevation view. To implement this assertion, the areas of the bounding boxes is compared. The area of the bounding box for a larger object, like a bus, should be greater than that of a smaller object, such as a bike. The relationship helps identify images where this proportionality is violated, indicating potential misdetections or errors in the object detection system (ODS) where incorrect features were learned.

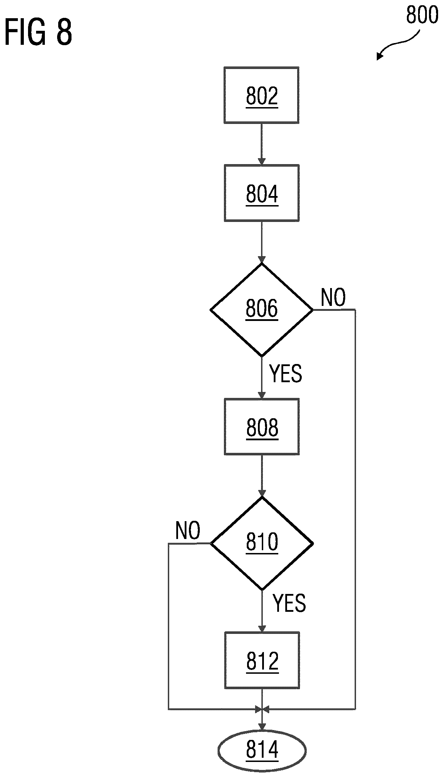

FIG 8 is a flowchart of disparity in bounding box dimension assertion 800 in conjunction with FIG 7. In Step 802, the process starts by detecting all objects within the frame and identifying their bounding boxes. In step 804, the process proceeds to find the neighbours of a bounding box by checking if the Euclidean distance is within the set threshold limit. For each detected bounding box, the process proceeds to step 806, where the system 200 checks the Euclidean distance to other bounding boxes to determine if they are neighbours, using a predefined distance threshold. If no neighbouring bounding boxes are found, the process loops back to step 802 to continue checking other bounding boxes. If neighbouring bounding boxes are found, proceed to the next step 808 of comparing the areas between neighbouring bounding boxes. The system 200 compares the areas of neighbouring bounding boxes. This involves calculating and analysing the size of each bounding box in relation to its neighbours. In step 810, the system 200 checks if the relative sizes of the bounding boxes are consistent with the expected order, ensuring that larger objects have larger bounding boxes compared to smaller objects. For example, larger objects should have larger bounding boxes compared to smaller objects. In a case the ordering is not violated, the process loops back to continue checking other bounding boxes. However, if the ordering is violated, proceed to the next step 812 of flagging assertion failure. In step 812, when an inconsistency in bounding box areas is detected, the system 200 flags an assertion failure and captures the current frame for further analysis. The process concludes at step 814 after flagging any assertion failures and capturing the relevant frames. The flowchart, therefore, enlists a method for validating the consistency of bounding box dimensions relative to the actual sizes of detected objects. By ensuring that larger objects have proportionally larger bounding boxes, the system 200 can detect, and flag discrepancies caused by misdetections or erroneous feature learning in the object detection model.

For instance, consider a scenario 700 where a light pole 704 is mis detected as an auto rickshaw. When comparing the bounding box areas of a nearby car 702 and the mis detected auto rickshaw, the assertion would identify a discrepancy. If the bounding box area of the mis detected auto rickshaw 704 is larger than that of the car, the assertion would fail. This failure highlights an error because the bounding box of an auto rickshaw 704 should not be larger than that of a car 702. Figure 7 illustrates an example of this assertion failure, where the bounding box area relationship is violated. By detecting such discrepancies, the present invention enhances the reliability of object detection systems. It ensures that bounding box dimensions are consistently accurate relative to the actual object sizes, thereby improving the overall accuracy and performance of the detection system.

Further, the proposed invention utilizes assertions to pinpoint faults in object detection operations by analyzing the detection outputs, which typically include crucial data such as the location of objects within the frame, the class or type of the object, the bounding box coordinates within the frame, and the confidence level of the model's identification. Leveraging these assertions offers several advantages, like improved accuracy by identifying instances where multiple objects are erroneously detected due to overlapping bounding boxes, and enhanced reliability, using the disparity in bounding box dimension assertion, the present approach ensures the proportional accuracy of bounding boxes relative to the actual sizes of detected objects. Further, the system 200 prevents errors caused by misdetections or incorrect feature learning by detecting and flagging discrepancies in bounding box dimensions, thus enhancing the reliability of the object detection system. Furthermore, the present invention helps in early detection of anomalies. Both assertions facilitate early detection of anomalies in object detection outputs by swiftly identifying issues such as misclassifications, overlapping bounding boxes, or inconsistent bounding box sizes, the system 200 can promptly address these anomalies before they escalate, thereby minimizing errors and ensuring the integrity of the detection process. By pinpointing faults in object detection, the assertions contribute to the optimization of system performance. Based on the rectification of misclassifications, eliminating redundant detections, and ensuring accurate bounding box dimensions, the system 200 operates more efficiently and effectively, delivering reliable detection results in various applications. The assertions provide valuable insights for debugging and improving the object detection model. By capturing frames with assertion failures and analyzing the detected issues, users can identify underlying problems in the detection algorithm or training data, leading to iterative enhancements and refinement of the system's performance over time. In essence, our invention's assertions offer a comprehensive and proactive approach to identify and address faults in object detection operations, ultimately leading to enhanced accuracy, reliability, and performance of the system 200 across diverse scenarios and applications.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

### Reference Numerals

| | |
|---|---|
| method | 100 |
| step | 110 |
| step | 120 |
| step | 130 |
| step | 140 |
| step | 150 |
| system | 200 |
| bus | 202 |
| processing unit | 204 |
| memory | 206 |
| user device | 208 |
| memory unit | 210 |
| input device | 212 |
| output device | 214 |
| a module | 216 |
| common issues in object detection system | 300 |
| object detection system | 400 |
| input device | 402 |
| video processor | 404 |
| object detector | 406 |
| object tracker | 408 |
| domain logic | 410 |
| output device | 412 |
| a bounding box overlap in traffic scenario | 500 |
| a flowchart of depiction of a bounding box overlap in traffic scenario | 600 |
| overlap in the bounding box areas of bus and motorbike | 502 |
| a disparity in bounding box dimension assertion | 700 |
| bounding box for car | 702 |
| bounding box for the light pole mis detected auto rickshaw | 704 |
| a flowchart for disparity in bounding box dimension assertion | 800 |

## Claims

1. A computer implemented method for automatic fault detection in object detection systems, comprising:
receiving a video frame input from an input device;
preprocessing the video frame input using a plurality of bounding boxes associated with detection of a plurality of objects;
validating the detection of the plurality of objects based on a set of assertions associated with the plurality of the bounding boxes; and
generating a flagged video frame input based on the validation of the received video frame input.

2. The method of claim 1, the method further comprises of a bounding box overlap assertion, the assertion comprising:
determining a percentage of the overlapping of a first bounding box of the plurality of the bounding boxes and the second bounding box of the plurality of the bounding boxes; and
flagging the received video frame using the determination of the percentage of overlapping being more than a predefined threshold.

3. The method of claim 2, wherein the determination of the first bounding box overlap assertion further comprises: calculating the Intersection over Union (IoU) of overlapping bounding boxes; and flagging an overlap greater a threshold percentage.

4. The method of claim 1, the method further comprises of a bounding box disparity assertion, the assertion comprising:
determining a distance between a first bounding box of the plurality of the bounding boxes and a second bounding box of the plurality of the bounding boxes;
determining a violation of logical size relationship between the first bounding box and the second bounding box,
wherein the distance between the first bounding box and the second bounding box being less than a threshold neighboring distance, and
wherein a smaller object has a larger bounding box than a larger object within the same frame; and
flagging the received video frame data based on the determination of the violation.

5. The method of claim 1, further comprising: recapturing a new frame associated with the flagged video frame data using the input device.

6. A simulation apparatus for automatic fault detection in object detection systems, the system apparatus comprising:
one or more processing units; and
a memory unit communicatively coupled to the one or more processing units, wherein the memory unit comprises a module stored in the form of machine-readable instructions executable by the one or more processing units, wherein the module is configured to perform method steps according to any of the claims 1 to 5.

7. A system for automatic fault detection in object detection systems, the system comprising:
at least one input device; and
an apparatus according to claim 6, communicatively coupled to the at least one input device, wherein the apparatus is configured for managing the computer simulated environments used for testing of autonomous vehicles based on inputs received from the at least one client, according to any of the method claims 1 to 5.

8. A computer-program product having machine-readable instructions stored therein, which when executed by one or more processing units, cause the processing units to perform a method according to any of the claims 1 to 5.
